(19) **Europäisches Patentamt**
**European Patent Office**
**Office européen des brevets**

(11) **EP 1 993 249 B1**

(12) **EUROPÄISCHE PATENTSCHRIFT**

(45) Veröffentlichungstag und Bekanntmachung des Hinweises auf die Patenterteilung:
**09.11.2016   Patentblatt 2016/45**

(51) Int Cl.:
***H04L 27/26*** *(2006.01)*

(21) Anmeldenummer: **08007126.9**

(22) Anmeldetag: **10.04.2008**

(54) **Verfahren und Vorrichtung zur Ermittlung einer ganzzahligen Trägerfrequenzabweichung in einem OFDM-Übertragungssystem mittels Auswertung unterschiedlicher Modulationswertigkeiten verschiedener Subträgergruppen**

Method and device for determining an integer carrier frequency deviation in an OFDM system by evaluating different modulation values of various sub-carrier groups

Procédé et dispositif d'établissement d'une déviation de fréquence porteuse en nombres entiers dans un système de transmission OFDM à l'aide d'une évaluation de différentes valeurs de modulation de différents groupes de sous-porteuses

(84) Benannte Vertragsstaaten:
**DE FR GB**

(30) Priorität: **15.05.2007   DE 102007022746**
**17.07.2007   DE 102007033287**

(43) Veröffentlichungstag der Anmeldung:
**19.11.2008   Patentblatt 2008/47**

(73) Patentinhaber: **Rohde & Schwarz GmbH & Co. KG**
**81671 München (DE)**

(72) Erfinder: **Galda, Dirk, Dr.**
**85540 Haar (DE)**

(74) Vertreter: **Körfer, Thomas et al**
**Mitscherlich PartmbB**
**Patent- und Rechtsanwälte**
**Sonnenstrasse 33**
**80331 München (DE)**

(56) Entgegenhaltungen:
**DE-A1- 4 208 808      DE-A1- 19 718 932**
**DE-T2- 69 807 945**

**Beschreibung**

Die Erfindung betrifft ein Verfahren und eine Vorrichtung zur Ermittlung einer ganzzahligen Trägerfrequenzabweichung in einem OFDM-Übertragungssystem.

Eine notwendige Voraussetzung für den sicheren Betrieb eines OFDM-Übertragungssystems (Orthogonal-Frequency-Division-Multiplex) ist eine exakte Synchronisierung der Trägerfrequenz zwischen Sender und Empfänger. Ist die Trägerfrequenz zwischen Sender und Empfänger nicht synchronisiert, so ist die Orthogonalität zwischen den einzelnen Subträgersignalen in den einzelnen Subkanälen des OFDM-Übertragungssystems gestört und Übersprechen zwischen den einzelnen Subkanälen - Inter-Carrier-Interference - mindert die Übertragungsqualität.

Für die Trägerfrequenzsynchronisierung, die somit wesentlicher Bestandteil eines OFDM-Übertragungssystems darstellt, wird üblicherweise die Ermittlung der Trägerfrequenzabweichung in zwei Schritten durchgeführt:

In einem ersten Schritt wird die fraktionale Trägerfrequenzabweichung, also der Anteil $\varepsilon \cdot \Delta f$ der Trägerfrequenzabweichung ermittelt, der kleiner als der Subträgerabstand $\Delta f$ des OFDM-Übertragungssystems ist (mit $|\varepsilon| < 1/2$).

In einem zweiten Schritt wird die ganzzahlige Trägerfrequenzabweichung, also das ganzzahlige Vielfache $m \cdot \Delta f$ des Subträgerabstands $\Delta f$ des OFDM-Übertragungssystems ermittelt (mit $m \in N$).

Während, wie z.B. in der US 7,133,479 B2 gezeigt, die Ermittlung der fraktionalen Trägerfrequenzabweichung üblicherweise mittels Korrelationsanalyse oder, wie in der DE 698 07 945 T2 aufgezeigt ist, mittels Bestimmung eines Phasenversatzes zwischen unterschiedlichen Symbolen desselben Trägers im Zeitbereich bestimmt wird, erfolgt die Ermittlung der ganzzahligen Trägerfrequenz-abweichung über eine Korrelationsanalyse im Frequenzbe-reich.

Für die Ermittlung der ganzzahligen Trägerfrequenzabweichung im Frequenzbereich können prinzipiell die strukturellen Eigenschaften der einzelnen Subkanäle und deren OFDM-Symbole ausgenutzt werden:

• Struktur der mit Symbolen belegten Subkanäle und der von Symbolen befreiten Subkanäle,
• Subkanäle mit Nutzdaten-Symbole,
• Subkanäle mit verstreuten und kontinuierlich verteilten Pilotsymbolen (Scattered and Continual Pilots),
• Subkanäle mit kontinuierlichen Referenzsymbolen (Reference Symbols),
• Signalisierungskanäle mit Signalisierungsinformationen und
• Subkanäle mit jeweils unterschiedlich modulierten OFDM-Symbolen

Die Verwendung von Subkanälen mit Nutzdaten-Symbolen und von Subkanälen mit Signalisierungsinformation wird im Stand der Technik zur Ermittlung der ganzzahligen Trägerfrequenz-abweichung nicht verwendet, da Inhalt und Position der Nutzdaten-Symbole und der Signalisierungsinformation dem Empfänger üblicherweise a-priori nicht bekannt sind.

Die übliche Verwendung von Pilotsymbolen und Referenzsymbolen zur Ermittlung der ganzzahligen Trägerfrequenzabweichung weist den deutlichen Nachteil auf, dass anstelle der Pilot- und Referenzsymbole keine Nutzdaten-Symbole übertragen werden können und deshalb die Bandbreiteneffizienz reduziert ist.

Die Ermittlung der ganzzahligen Trägerfrequenzabweichung mittels Auswertung der spezifischen Summenleistung der belegten und unbelegten Subkanäle weist den Nachteil auf, dass die zu ermittelnde Summenleistung eine starke Abhängigkeit von den Eigenschaften der Kanalübertragungsfunktion aufweist. Bei Vorliegen von immer wieder auftretenden zeitvarianten Störungen im Übertragungskanal und von Dämpfungen an den Frequenzträgerrändern besteht bei diesem Verfahren eine erhöhte Falschalarmwahrscheinlichkeit, die das Verfahren für den praktischen Einsatz nicht prädestiniert.

Aufgabe der Erfindung ist es deshalb, ein Verfahren und eine Vorrichtung zur Ermittlung der ganzzahligen Trägerfrequenzabweichung zu schaffen, das/die einerseits eine hohe Bandbreiteneffizienz des OFDM-Übertragungskanals ermöglicht und andererseits eine hohe Unabhängigkeit von den Eigenschaften des OFDM-Übertragungskanals aufweist.

Die Aufgabe wird bezüglich des Verfahrens durch die Merkmale des Anspruchs 1 und bezüglich der Vorrichtung durch die Merkmale des Anspruchs 12 gelöst. Die Unteransprüche enthalten vorteilhafte Weiterbildungen.

Erfindungsgemäß wird zur Ermittlung der ganzzahligen Trägerfrequenzabweichung die strukturelle Eigenschaft von unterschiedlichen Modulationsarten in den einzelnen Subkanälen des OFDM-Übertragungssystems ausgenutzt, indem in bestimmten Subkanälen phasenmodulierte OFDM-Symbole und in den übrigen Subkanälen OFDM-Symbole gesendet werden, die in einer Modulation mit einer zur Anzahl der Phasenzustände der Phasenmodulation höheren Anzahl von Phasenzuständen moduliert sind.

Werden die in den einzelnen Subkanälen des OFDM-Übertragungsrahmens empfangenen OFDM-Symbole mit einem der Anzahl von Phasenzuständen der Phasenmodulation entsprechenden Faktor, der gleichzeitig auch der Modulationswertigkeit der Phasenmodulation entspricht, potenziert, so wird die Modulation der phasenmodulierten OFDM-Symbole beseitigt, während sie bei den OFDM-Symbolen in einer Modulation mit einer zur Anzahl der Phasenzustände der Phasenmodulation höheren Anzahl von Phasenzuständen noch vorhanden ist.

Die Entfernung der Modulation durch Potenzierung führt dazu, dass die phasenmodulierten OFDM-Symbole jeweils einzig einen positiven, von Null verschiedenen Inphase-Signalanteil aufweisen. Die in einer Modulation mit einer höheren Anzahl von Phasenzuständen modulierten OFDM-Symbole können nach der Potenzierung aufgrund noch nicht vollständig erfolgter Entfernung der Modulation dagegen durchaus auch negative Inphase-Signalanteile und/oder positive bzw. negative Quadratur-Signalanteile aufweisen.

Da komplexwertige OFDM-Symbole unabhängig von ihrer Modulationsart mittelwertfrei sind, ergibt eine Mittelung über phasenmodulierte, mit einem Faktor entsprechend der Anzahl ihrer Phasenzustände potenzierte OFDM-Symbole stets einen positiven reellen Mittelwert, während die Mittelung über alle mit einer Modulation mit höherer Anzahl von Phasenzuständen modulierten und mit einem Faktor entsprechend der Anzahl von Phasenzuständen der Phasenmodulation potenzierten OFDM-Symbole einen Mittelwert von Null ergibt.

Auf diese Weise ergibt sich durch erfindungsgemäße Mittelung über alle empfangenen und potenzierten OFDM-Symbole eines jeweiligen Subkanals ein Unterscheidungskriterium, mit dem im untersuchten Subkanal festgestellt werden kann, ob ein Subkanal mit phasenmodulierten OFDM-Symbolen oder ein Subkanal in einer Modulation mit einer zur Anzahl der Phasenzustände der Phasenmodulation höheren Anzahl von Phasenzuständen vorliegt.

Da dem Empfänger die Subkanäle mit phasenmodulierten OFDM-Symbolen bekannt sind, ist es im Empfänger möglich, eine Metrik aus betragsquadrierten arithmetischen Mittelwerten, die zu den mit phasenmodulierten OFDM-Symbolen besetzten Subkanälen gehören, zu berechnen und durch schrittweise Variation um jeweils einen ganzzahligen Faktor - entsprechend einem Vielfachen des Subträgerabstandes - zugehörige Metriken aus Mittelwerten zu ermitteln, die jeweils zu Subkanälen gehören, die um ein dem ganzzahligen Faktor entsprechendes Vielfaches des Subträgerabstands zu den Subkanälen mit den phasenmodulierten OFDM-Symbolen versetzt sind.

Durch Vergleich der somit ermittelten Metriken kann eine maximale Metrik bestimmt werden, die bei einer Übertragung mit oder ohne Trägerfrequenzverschiebung zu den Subkanälen gehört, die mit phasenmodulierten OFDM-Symbole besetzt sind. Der zur maximal ermittelten Metrik gehörige ganzzahlige Faktor ergibt somit den gesuchten ganzzahligen Faktor einer ganzzahligen Trägerfrequenzverschiebung.

In den mit phasenmodulierten OFDM-Symbolen besetzten Subkanälen werden typischerweise Signalisierungsinformationen - aber eventuell auch Nutzdaten-OFDM-Symbole - und in den übrigen Subkanälen mit OFDM-Symbolen in einer Modulation mit einer zur Anzahl von Phasenzuständen der Phasenmodulation höheren Anzahl von Phasenzuständen werden typischerweise Nutzdaten-OFDM-Symbole übertragen, so dass eine maximal mögliche Bandbreiteneffizienz erzielt wird.

Durch die Entfernung der Modulation aus den empfangenen OFDM-Symbolen mittels Potenzierung, durch die anschliessende Mittelung und durch eine optionale "harte Entscheidung" der potenzierten OFDM-Symbole mittels einer Signum-Funktion ist automatisch die ermittelte Trägerfrequenzabweichung unabhängig von der über der Systembandbreite des OFDM-Übertragungssystems frequenzabhängigen Übertragungsfunktion.

Als Metrik zur Ermittlung der ganzzahligen Trägerfrequenzabweichung kann der betragsquadrierte arithmetische Mittelwert für die jeweiligen Subkanäle wie auch jede andere ein eindeutiges Maximum ermittelnde Metrik-Funktion verwendet werden.

Die Modulation der phasenmodulierten OFDM-Symbole kann eine kohärente oder differenzielle Binary-Phase-Shift-Keying- (BPSK-, DBPSK-), Quaternary-Phase-Shift-Keying-(QPSK-,DQPSK-), M-wertige Phase-Shift-Keying-(M-PSK-,DM-PSK-) Modulation sein. Die in einer Modulation mit einer zur Anzahl der Phasenzustände der Phasenmodulation höheren Anzahl von Phasenzuständen modulierten OFDM-Symbole kann jede beliebige kohärente oder differenzielle Phasen-, Amplituden-, Amplituden-Phasen- oder Quadratur-Amplituden-Modulation sein.

Vor der Potenzierung der einzelnen empfangenen OFDM-Symbole wird typischerweise eine Entzerrung der empfangenen OFDM-Symbole durchgeführt. Wird in allen Subkanälen eine kohärente oder differenzielle Phasenmodulation verwendet, so kann die Entzerrung auf eine reine Phasenentzerrung reduziert werden, wobei in diesem Fall an die anschließende Potenzierung aufgrund unterschiedlicher Amplituden der einzelnen entzerrten und potenzierten OFDM-Symbole eine "Amplituden-Vereinheitlichung" mittels der obig erwähnten "harten Entscheidungs-Funktion" durchzuführen ist. In allen anderen Fällen ist eine Kombination aus einer Phasen- und Amplitudenentzerrung durchzuführen, wobei eine "harte Entscheidung" aufgrund einheitlicher Amplitudenwerte der einzelnen entzerrten und potenzierten OFDM-Symbole entfällt.

Ein Ausführungsbeispiel des erfindungsgemäßen Verfahrens und der erfindungsgemäßen Vorrichtung zur Ermittlung der Trägerfrequenzabweichung in einem OFDM-Obertragungssystem wird im folgenden anhand der Zeichnung im Detail erneut. Die Figuren der Zeichnung zeigen:

Fig.1A,1B          ein Konstellationsdiagramm eines QPSK- und eines BPSK-modulierten Subkanals nach einer Potenzierung der OFDM-Symbole mit Faktor 2 bzw. 4,

Fig. 2A,2B,2C     ein Konstellationsdiagramm eines Subkanals nach einer kombinierten Phasen- und Amplituden-Entzerrung, nach einer reinen Phasenentzerrung und nach einer "harten Entscheidung",

Fig. 3     ein Flussdiagramm eines Ausführungsbeispiels des erfindungsgemäßen Verfahrens zur Ermittlung der Trägerfrequenzabweichung in einem OFDM-Übertragungssystem und

Fig. 4     ein Blockdiagramm eines Ausführungsbeispiels der erfindungsgemäßen Vorrichtung zur Ermittlung der Trägerfrequenzabweichung in einem OFDM-Übertragungssystem.

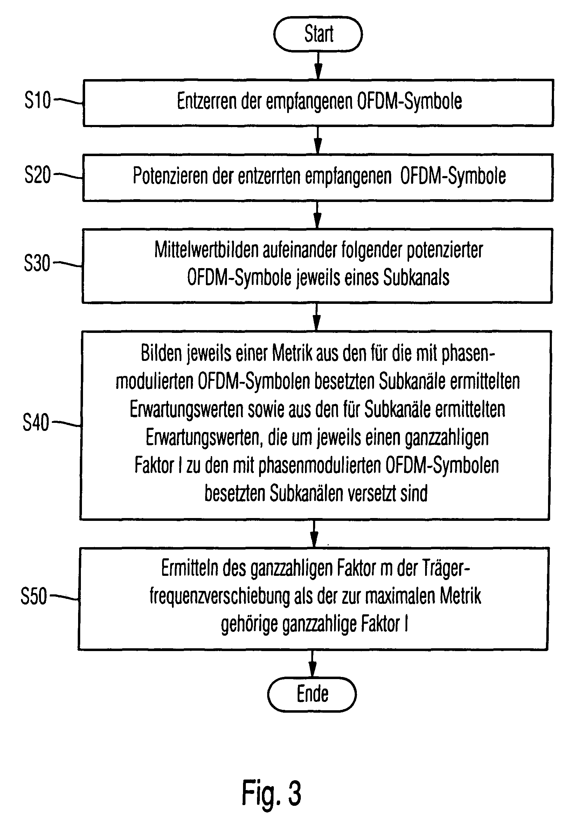

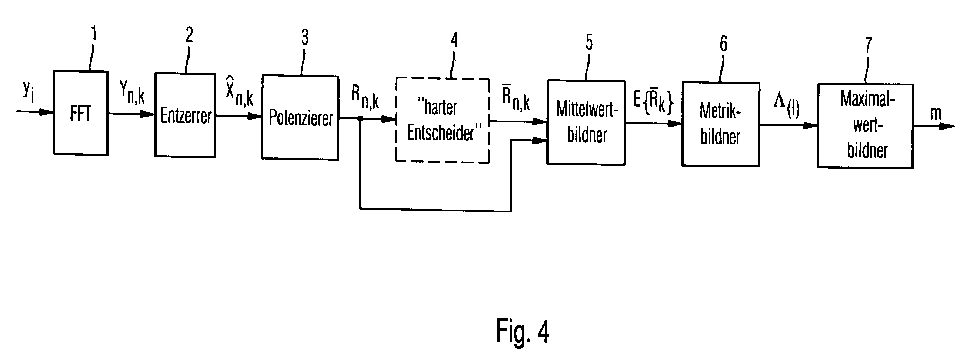

Bevor das erfindungsgemäße Verfahren und die erfindungsgemäße Vorrichtung zur Ermittlung der ganzzahligen Trägerfrequenzabweichung in einem OFDM-Übertragungssystem im Detail anhand der Figuren 3 und 4 beschrieben werden, werden im Folgenden die für das Verständnis der Erfindung erforderlichen mathematischen Grundlagen hergeleitet.

Das im Symbolintervall n und im Subkanal k empfangene OFDM-Symbol $Y_{n,k}$ wird im Empfänger gemäß Gleichung (1) bei einer OFDM-Demodulation aus der Fourier-Transformation einer der Anzahl $N_c$ von Subkanälen entsprechenden Anzahl von Abtastwerten $y_i = y(i \cdot T_A)$ des empfangenen OFDM-Signals $y(t)$ ermittelt.

$$Y_{n,k} = \frac{1}{\sqrt{N_C}} \cdot \sum_{i=0}^{N_C-1} y_i \cdot e^{-j2\pi ki/N_C} \qquad (1)$$

Das empfangene OFDM-Symbol $Y_{n,k}$ ergibt sich gemäß Gleichung (2) aus der Verzerrung des korrespondierenden gesendeten OFDM-Symbols $X_{n,k}$ mit dem zugehörigen Kanalübertragungsfaktor $H_{n,k}$ zuzüglich einem additiven, weißen Gauss-verteilten Rauschen $N_{n,k}$.

$$Y_{n,k} = H_{n,k} \cdot X_{n,k} + N_{n,k} \qquad (2)$$

Nach Optimierung des Signal-Rausch-Abstands des empfangenen Signals in einem Matched-Filter des Empfängers wird jedes verzerrte OFDM-Empfangssymbol $Y_{n,k}$ von der Verzerrung durch den zugehörigen Kanalübertragungsfaktor $H_{n,k}$ entzerrt. Da dem Empfänger der Kanalübertragungsfaktor $H_{n,k}$ nicht bekannt ist, ist die Entzerrung einzig auf der Basis aufeinander folgender OFDM-Empfangssymbole $Y_{n,k}$ und $Y_{n-1,k}$ durchzuführen. Zur Vereinfachung wird gemäß Gleichung (3) der Kanalübertragungsfaktor $H_{n,k}$ im Bereich aufeinander folgender Symbolintervalle als zeitinvariant angenommen, was auch in der Praxis als gültig angesehen werden kann.

$$H_{n,k} \approx H_{n-1,k} \qquad (3)$$

Für den Fall einer kombinierten Amplituden- und Phasenentzerrung wird zur Entzerrung des OFDM-Empfangssignals $Y_{n,k}$ ausgehend von Gleichung (2) unter Vernachlässigung des Kanalrauschens $N_{n,k}$ eine Division durch das im vorherigen Symbolintervall empfangene OFDM-Symbol $Y_{n-1,k}$ entsprechend Gleichung (4) durchgeführt, das einer differentiellen Demodulation entspricht.

$$\widehat{X}_{n,k} = \frac{Y_{n,k}}{Y_{n-1,k}} = \frac{H_{n,k} \cdot X_{n,k}}{H_{n-1,k} \cdot X_{n-1,k}} \qquad (4)$$

Unter Berücksichtigung eines in aufeinander folgenden Symbolintervallen zeitinvarianten Kanalübertragungsfaktors $H_{n,k}$ ergibt sich ausgehend von Gleichung (4) als Näherung für das entzerrten OFDM-Empfangssignal $\widehat{X}_{n,k}$ die Beziehung in Gleichung (5).

$$\widehat{X}_{n,k} \approx \frac{H_{n,k} \cdot X_{n,k}}{H_{n,k} \cdot X_{n-1,k}} = \frac{X_{n,k}}{X_{n-1,k}} \qquad (5)$$

Erweitert man den Zähler und Nenner der mathematischen Beziehung für das entzerrte OFDM-Empfangssignal $\hat{X}_{n,k}$ in Gleichung (5) mit dem konjugiert komplexen OFDM-Empfangssignal $X_{n-1,k}{}^*$ im vorherigen Symbolintervall, so erhält man die in Gleichung (6) dargestellte Beziehung für das entzerrte OFDM-Empfangssignal $\hat{X}_{n,k}$.

$$\widehat{X}_{n,k} \approx \frac{X_{n,k} \cdot X_{n-1,k}{}^\bullet}{X_{n-1,k} \cdot X_{n-1,k}{}^\bullet} = \frac{X_{n,k} \cdot X_{n-1,k}{}^\bullet}{\left|X_{n-1,k}\right|^2} \qquad (6)$$

Aus Gleichung (6) folgt, dass bei einer kombinierten Amplituden- und Phasenentzerrung mittels differentieller Demodulation der Einfluss des Kanalübertragungsfaktors $H_{n,k}$ beseitigt ist und gleichzeitig eine Phasenverzerrung des OFDM-Sendesymbols $X_{n,k}$ - Produkt $X_{n,k} \cdot X_{n-1,k}{}^*$ im Zählerterm der Gleichung (6) führt zu einer Phasendrehung gegenüber der Phasen der beiden aufeinander folgenden OFDM-Sendesymbole $X_{n,k}$ und $X_{n-1,k}$ - und eine Amplitudeverzerrung des OFDM-Sendesignals $X_{n,k}$ - Zähler- und Nennerterm der Gleichung (6) weisen jeweils unterschiedlichen Ampliduten auf - auftritt. Die Amplitudenverzerrung tritt hierbei nur bei einem amplitudenmodulierten OFDM-Sendesymbol $X_{n,k}$ - APSK-, ASK-, QAM-Signal - auf.

Für ein in Zeitrichtung differenziell moduliertes OFDM-Sendesymbol $X_{n,k}$ entsprechend Gleichung (7) geht die mathematische Beziehung für das entzerrte OFDM-Sendesymbol $\hat{X}_{n,k}$ in Gleichung (6) in die in Gleichung (8) dargestellte mathematische Beziehung über.

$$X_{n,k} = X_{n-1,k} \cdot B_{n,k} \qquad (7)$$

$$\widehat{X}_{n,k} \approx B_{n,k} \qquad (8)$$

Für den Fall einer reinen Phasenentzerrung, die typischerweise bei einem reinen phasenmodulierten OFDM-Sendesymbol - BPSK-, QPSK-, M-PSK-Signal - zum Einsatz kommt, wird unter Vernachlässigung des Kanalrauschens $N_{n,k}$ für die Ermittlung des entzerrten OFDM-Sendesymbols $\hat{X}_{n,k}$ anstelle einer Division zweier aufeinander folgender OFDM-Empfangssignale $Y_{n,k}$ und $Y_{n-1,k}$ eine Multiplikation eines OFDM-Empfangssymbol $Y_{n,k}$ mit dem konjugiert komplexen OFDM-Empfangssymbol $Y_{n-1,k}{}^*$ zum vorherigen Symbolintervall entsprechend Gleichung (9) durchgeführt.

$$\widehat{X}_{n,k} = Y_{n,k} \cdot Y_{n-1,k}{}^\bullet = H_{n,k} \cdot X_{n,k} \cdot (H_{n-1,k} \cdot X_{n-1,k})^\bullet \qquad (9)$$

Unter Berücksichtigung eines in aufeinander folgenden Symbolintervallen zeitinvarianten Kanalübertragungsfaktors $H_{n,k}$ ergibt sich unter Berücksichtigung der Näherung in Gleichung (3) für das entzerrten OFDM-Empfangssignal $\hat{X}_{n,k}$ die Beziehung in Gleichung (10).

$$\widehat{X}_{n,k} \approx \left|H_{n,k}\right|^2 \cdot X_{n,k} \cdot X_{n-1,k}{}^\bullet \qquad (10)$$

Die Beziehung in Gleichung (10) für das entzerrte OFDM-Empfangssignal $\hat{X}_{n,k}$ weist einen phasenverzerrenden Term - Produkt $X_{n,k} \cdot X_{n-1,k}{}^*$ führt zu einer Phasendrehung gegenüber den Phasen der beiden aufeinander folgenden OFDM-Sendesymbole $X_{n,k}$ und $X_{n-1,k}$ auf und führt zu einer Skalierung mit dem Betragsquadrat $|H_{n,k}|^2$ des Kanalübertragungsfaktors $H_{n,k}$.

Die sich an die Entzerrung anschließende Potenzierung der entzerrten OFDM-Empfangssymbole $\hat{X}_{n,k}$ um die Modulationswertigkeit $M$ der verwendeten Phasenmodulation führt für die beiden Fälle der Entzerrung - kombinierte Amplituden- und Phasenentzerrung und reine Phasenentzerrung - zu der in Gleichung (11) dargestellten Beziehung des potenzierten, entzerrten XOFDM-Empfangssymbols $\lambda_{n,k}$.

$$\lambda_{n,k} = \left(\widehat{X}_{n,k}\right)^M = \begin{cases} \left|H_{n,k}\right|^{2M} \cdot \left(X_{n,k} \cdot X_{n-1,k}^{\,*}\right)^M \textit{ für Phasenentzerrung} \\[2em] \dfrac{\left(X_{n,k} \cdot X_{n-1,k}^{\,*}\right)^M}{\left|X_{n-1,k}\right|^{2M}} \textit{ für vollständige Entzerrung} \end{cases} \qquad (11)$$

Für die in bestimmten Subkanälen des OFDM-Übertragungsrahmens einzig phasenmodulierten OFDM-Sendesymbole $X_{n,k}$ mit einer dem Potenzierungsfaktor $M$ entsprechenden Modulationswertigkeit ergeben die Terme $X_{n,k} \cdot X_{n-1,k}^{*}$ und $|X_{n-1,k}|^{2M}$ jeweils den Wert 1, so dass Gleichung (11) in Gleichung (12) übergeht.

$$\lambda_{n,k} = \left(\widehat{X}_{n,k}\right)^M = \begin{cases} \left|H_{n,k}\right|^{2M} \textit{ für Phasenentzerrung} \\[1em] 1 \textit{ für vollständige Entzerrung} \end{cases} \qquad (12)$$

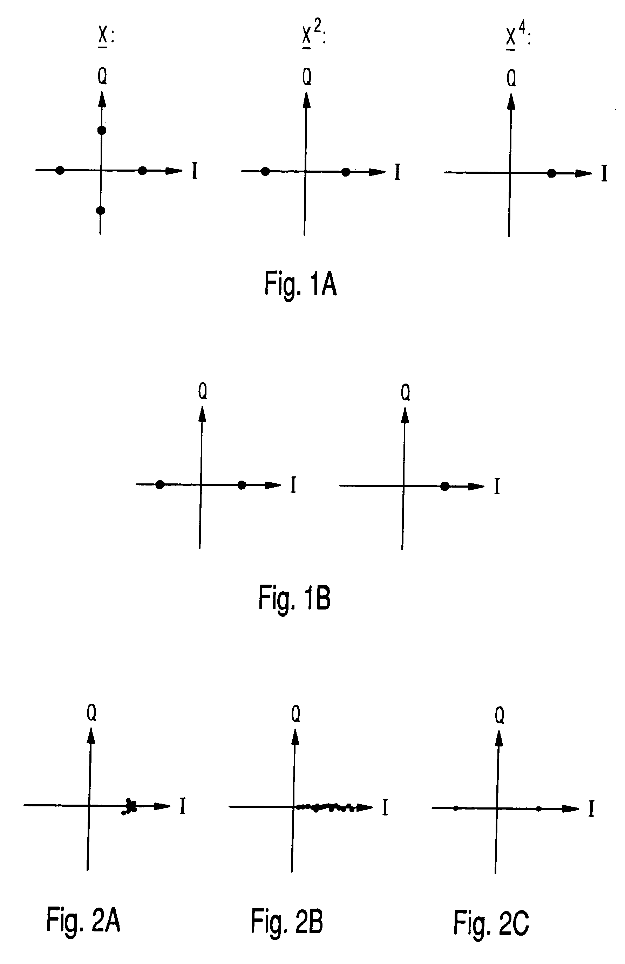

In Fig. 1A ist für alle möglichen OFDM-Symbole des Symbolalphabets einer QPSK-Modulation - Spalte X - die Auswirkung einer Potenzierung um den Faktor 2 - Spalte $X^2$ - und einer Potenzierung um den Faktor 4 - Spalte $X^4$ - dargestellt, während in Fig. 1B für alle möglichen OFDM-Symbole des Symbolalphabets einer BPSK-Modulation - Spalte X - die Auswirkung einer Potenzierung um den Faktor 2 - Spalte $X^2$ - dargestellt ist. Zu erkennen ist, dass bei einer QPSK-Modulation mit einer Modulationswertigkeit von 4 eine Potenzierung um den Faktor 4 und bei einer BPSK-Modulation mit einer Modulationswertigkeit von 2 eine Potenzierung um den Faktor 2 erforderlich ist, um die Modulation aus den empfangenen OFDM-Empfangssymbolen zu entfernen, so dass einzig ein OFDM-Empfangssymbol auf der positiven Inphase-Achse des Konstellationsdiagramms übrig bleibt.

Bei Vorliegen von Kanalrauschen und einer höherwertigen Modulation des OFDM-Nutzdatensymbole ergibt sich im Fall einer kombinierten Amplituden- und Phasenentzerrung mittels differentieller Demodulation und einer vollständigen Entfernung der Modulation - Potenzierung der OFDM-Empfangssymbole mit einem der Anzahl von Phasenzuständen der verwendeten Phasenmodulation entsprechenden Faktor $M$ - das in Fig. 2A dargestellte Konstellationsdiagramm mit potenzierten und entzerrten OFDM-Empfangssymbolen, die um einen auf der positiven Inphase-Achse befindlichen Punkt konzentriert sind.

Im Fall einer Phasenentzerrung und einer vollständigen Entfernung der Modulation ergibt sich bei Vorliegen eines frequenzselektiven Übertragungskanals und von höherwertigen amplituden- und phasenmodulierten OFDM-Nutzdatensymbole das in Fig. 2B dargestellte Konstellationsdiagramm mit potenzierten und entzerrten OFDM-Empfangssymbolen, die aufgrund fehlender Amplitudenentzerrung entlang der positiven Inphase-Achse angeordnet sind. Um im Fall einer reinen Phasenentzerrung ein Konstellationsdiagramm mit OFDM-Empfangssymbolen ohne Modulation entsprechend Fig. 2A zu verwirklichen, ist die Phasenentzerrung vorzugsweise seriell mit einer "harten Entscheidung" mittels einer Signum-Funktion gemäß Gleichung (13) zu koppeln. Die mittels einer Signums-Funktion diskretisierten, potenzierten und phasenentzerrten OFDM-Empfangssymbole $\overline{\lambda_{n,k}}$ ergeben sich somit entsprechend Gleichung (14) und sind im Konstellationsdiagramm der Fig. 2C dargestellt.

$$sign(x) = \begin{cases} +1 & x > 0 \\ 0 & x = 0 \\ -1 & x < 0 \end{cases} \qquad (13)$$

$$\overline{\lambda}_{n,k} = sign\left\{\lambda_{n,k}\right\} \qquad (14)$$

Eine Mittelung über mehrere aufeinander folgende potenzierte, entzerrte und eventuell mittels Signum-Funktion diskretisierte OFDM-Empfangssymbole eines Subkanals des OFDM-Übertragungsrahmens ergibt einen Erwartungswert $E\{\overline{\lambda}_{n,k}\}$ für jeden Subkanal $k$ gemäß Gleichung (15), der im Falle eines phasenmodulierten OFDM-Empfangssymbols mit einer dem Potenzierungsfaktor $M$ entsprechenden Modulationswertigkeit den Wert 1 und im Fall eines in einer Modulation mit einem zur Modulationswertigkeit der Phasenmodulation höheren Anzahl von Phasenzuständen modulierten OFDM-Empfangssymbols aufgrund von Mittelwertfreiheit den Wert 0 aufweist.

$$E\left\{\overline{\lambda}_{n,k}\right\} = \begin{cases} 1 & \text{für phasenmodulierte OFDM} - \text{Symbole mit Modulationswertigkeit } M \\ 0 & \text{für OFDM} - \text{Symbole mit Modulationswertigkeit} > M \end{cases}$$

(15)

In der Praxis wird der Erwartungswert $E\{\overline{\lambda}_{n,k}\}$ der diskretisierten, potenzierten und phasenentzerrten OFDM-Empfangssymbole $\overline{\lambda}_{n,k}$ bevorzugt durch den betragsquadrierten arithmetischen Mittelwert $\left|\sum_n \overline{\lambda}_{n,k}\right|^2$ ersetzt. Gemäß Gleichung (16) wird eine Metrik $\Lambda(l)$ aus den betragsquadrierten arithmetischen Mittelwerten $\left|\sum_n \overline{\lambda}_{n,k}\right|^2$ der diskretisierten, potenzierten und phasenentzerrten OFDM-Empfangssymbole $\overline{\lambda}_{n,k}$ für diejenigen Subkanäle des OFDM-Übertragungsrahmens, in denen phasenmodulierte OFDM-Symbole übertragen werden, und für diejenigen Subkanäle des OFDM-Übertragungsrahmens, die zu den mit phasenmodulierten OFDM-Symbolen besetzten Subkanälen um einen ganzzahligen Faktor $l$ versetzt sind, berechnet.

$$\Lambda(l) = \sum_{k \in \mathfrak{M}} \left|\sum_n \overline{\lambda}_{n,k+l}\right|^2$$

(16)

Hierbei stellt $\mathfrak{M}$ die Menge der mit phasenmodulierten OFDM-Symbolen besetzten Subkanäle des OFDM-Übertragungsrahmens dar. Die Metrik $\Lambda(l)$ kann Werte zwischen Null und der Anzahl der mit phasenmodulierten OFDM-Symbolen besetzten Subkanäle des OFDM-Übertragungsrahmens - entsprechend der Wertigkeit der Menge $\mathfrak{M}$ - annehmen. Die Metrik $\Lambda(l)$ mit einem der Wertigkeit der Menge $\mathfrak{M}$ entsprechenden Wert gehört zu den einzig mit phasenmodulierten OFDM-Symbolen besetzten Subkanälen.

Auf diese Weise ist es möglich, durch Variation des ganzzahligen Faktors $l$ die maximale, der Wertigkeit der Menge $\mathfrak{M}$ entsprechende Metrik $\Lambda(l)$ zu ermitteln, die sich einzig aus arithmetischen Mittelwertenwerten in Höhe von 1 zusammensetzt und somit einzig zu den mit phasenmodulierten OFDM-Symbolen besetzten Subkanälen im OFDM-Übertragungsrahmen gehört. Der zur maximalen Metrik $\Lambda(l)$ gehörige ganzzahlige Faktor $l$ stellt die Frequenzlage der mit phasenmodulierten OFDM-Symbolen besetzten Subkanälen bei einer ganzzahligen Trägerfrequenzverschiebung zu der Frequenzlage der mit phasenmodulierten OFDM-Symbolen besetzten Subkanälen im Falle einer korrekten Trägerfrequenz dar. Der ganzzahlige *Faktor m* der Trägerfrequenzverschiebung ergibt sich folglich gemäß Gleichung (17) aus dem zur maximalen Metrik $\Lambda(l)$ gehörige ganzzahligen Faktor $l$.

$$m = \arg\max_l \left\{\Lambda(l)\right\}$$

(17)

Im Folgenden wird ein Ausführungsbeispiel des erfindungsgemäßen Verfahrens zur Ermittlung der ganzzahligen Trägerfrequenzabweichungen in einem OFDM-Übertragungssystem anhand des Flussdiagramms in Fig. 3 erläutert.

Im ersten Verfahrenschritt S10 werden die in den einzelnen Symbolintervallen $n$ und in den einzelnen *Subkanälen k* empfangenen OFDM-Symbole $Y_{n,k}$ im Rahmen einer kombinierten Amplituden- und Phasenentzerrung mittels differentieller Demodulation gemäß Gleichung (6) bzw. Gleichung (8) oder im Rahmen einer reinen Phasenentzerrung gemäß Gleichung (10) entzerrt.

In Abhängigkeit der verwendeten Entzerrung - kombinierte Amplituden- und Phasenentzerrung oder reine Phasenentzerrung - werden die einzelnen entzerrten OFDM-Empfangssymbole $\hat{X}_{n,k}$ gemäß Gleichung (11) bzw. im Fall eines reinen phasenmodulierten OFDM-Signals gemäß Gleichung (12) mit einem der Anzahl von Phasenzuständen bzw. der Modulationswertigkeit der verwendeten Phasenmodulation entsprechenden Faktor $M$ im nächsten Verfahrenschritt S20 potenziert.

Bei Verwendung einer Phasenentzerrung erfolgt im Anschluss an die Potenzierung in Verfahrenschritt S20 gemäß Gleichung (14) eine Diskretisierung der potenzierten phasenentzerrten OFDM-Empfangssignale $\lambda_{n,k}$ mittels einer "harten Entscheidung" auf der Basis einer Signum-Funktion auf die diskreten Werte -1, 0 und 1.

Im nächsten Verfahrenschritt S30 erfolgt für jeden einzelnen Subkanal $k$ des OFDM-Übertragungsrahmens eine arithmetische Mittelwertbildung über mehrere zeitlich aufeinander folgende potenzierte, entzerrte oder optional über mehrere zeitlich aufeinander folgende diskretisierte, potenzierte, entzerrte OFDM-Empfangssymbole $\lambda_{n,k}$ bzw. $\overline{\lambda}_{n,k}$ und anschließende Betragsquadrierung. In der Praxis wird bevorzugt ein betragsquadrierter arithmetischer Mittelwert

$$\left|\sum_n \lambda_{n,k}\right|^2 \quad \text{bzw.} \quad \left|\sum_n \overline{\lambda}_{n,k}\right|^2 \quad \text{mit Mittelungslänge 1 verwendet.}$$

Der darauf folgende Verfahrensschritt S40 beinhaltet die Berechnung einer Metrik $\Lambda(l)$ gemäß Gleichung (16) bestehend aus betragsquadrierten, im Verfahrenschritt S30 ermittelten betragsquadrierten arithmetischen Mittelwerten

$$\left|\sum_n \lambda_{n,k}\right|^2 \quad \text{bzw.} \quad \left|\sum_n \overline{\lambda}_{n,k}\right|^2 \quad \text{von aufeinander folgenden entzerrten, otenzierten oder optional über mehrere zeitlich}$$

aufeinander folgende diskretisierte, potenzierte, entzerrte OFDM-Empfangssymbole $\lambda_{n,k}$ bzw. $\overline{\lambda}_{n,k}$ in um den jeweiligen ganzzahligen Faktor $l$ gegenüber den mit phasenmodulierten OFDM-Symbolen besetzten Subkanälen versetzten Subkanälen.

Im abschließenden Verfahrensschritt S50 wird die maximale Metrik $\Lambda(l)$ aus allen in Verfahrensschritt S40 für jeden ganzzahligen Faktor $l$ berechneten Metriken $\Lambda(l)$ und der dazugehörige ganzzahlige Faktor $l$, der dem ganzzahligen Faktor $m$ der Trägerfrequenzverschiebung entspricht, gemäß Gleichung (17) ermittelt.

Das in Fig. 4 dargestellte Blockdiagramm eines Ausführungsbeispiels der erfindungsgemäßen Vorrichtung zur Ermittlung einer ganzzahligen Trägerfrequenzverschiebung in einem OFDM-Übertragungssystem führt in einem Fourier-Transformator 1 - typischerweise ein Fast-Fourier-Transformator - aus Abtastwerten $y_i$ des OFDM-Empfangssignals $y(t)$ die Ermittlung der OFDM-Empfangssymbole $Y_{n,k}$ in den einzelnen Symbolintervallen $n$ und in den einzelnen Subkanälen $k$ mittels Fourier-Transfor-mation durch.

Im darauf folgenden Entzerrer 2, der entweder als kombinierter differentieller Demodulator zur kombinierten Amplituden- und Phasenentzerrung oder als rein Phasenentzerrer realisiert ist, werden die einzelnen OFDM-Empfangssymbole $Y_{n,k}$ hinsichtlich ihrer Verzerrung auf dem Übertragungskanal mit dem Kanalübertragungsfaktor $H_{n,k}$ entzerrt.

Die entzerrten OFDM-Empfangssymbole $\hat{X}_{n,k}$ werden in einem Potenzierer 3 mit einem der Anzahl von Phasenzuständen bzw. der Modulationswertigkeit der verwendeten Phasenmodulation entsprechenden ganzzahligen Faktor $M$ potenziert.

Die entzerrten und potenzierten OFDM-Empfangssymbole $\lambda_{n,k}$ werden im Fall einer reinen Phasenentzerrung durch einen optional eingesetzten - gestrichelte Linie - "harten Entscheider" 4 über eine Signum-Funktion auf einem der drei Werte -1, 0 und +1 diskretisiert.

In einem darauf folgenden Mittelwertbildner 5 werden einzelne aufeinander folgende entzerrte und potenzierte OFDM-Empfangssymbole $\lambda_{n,k}$bzw. optional einzelne aufeinander folgende entzerrte, potenzierte und diskretisierte OFDM-Empfangssymbole $\overline{\lambda}_{n,k}$ in jedem einzelnen Subkanal $k$ arithmetisch gemittelt.

Ein Metrikbildner 6 berechnet aus den vom Mittelwertbildner 5 ermittelten arithmetischen Mittelwerten in den mit phasenmodulierten OFDM-Symbolen besetzten Subkanälen bzw. in den um einen ganzzahligen Faktor $l$ zu den mit phasenmodulierten OFDM-Symbolen besetzten Subkanälen versetzten Subkanälen durch Betragsquadrierung der einzelnen arithmetischen Mittelwerte und anschließende Summation der jeweiligen betragsquadrierten arithmetischen Mittelwerte jeweils eine vom ganzzahligen Faktor $l$ abhängige Metrik.

Ein anschließender Maximalwertbildner 7 ermittelt aus den vom Metrikbildner 6 berechneten Metriken die maximale Metrik und deren zugehöriger ganzzahliger Faktor $l$, der dem ganzzahligen Faktor $m$ der ganzzahligen Trägerfrequenzverschiebung im OFDM-Übertragungssystem entspricht.

Die Erfindung ist nicht auf die beiden dargestellten Ausführungsformen der erfindungsgemäßen Vorrichtung und des erfindungsgemäßen Verfahrens zur ganzzahligen Trägerfrequenzverschiebung in einem OFDM-Übertragungssystem beschränkt. Von der Erfindung sind auch andere, obig nicht dargestellte Ausführungen der Entzerrung, der Mittelung und der Metrikbildung abgedeckt. Alle beschriebenen und/ oder gezeichneten Merkmale sind im Rahmen der Erfindung beliebig miteinander kombinierbar.

**Patentansprüche**

1. Verfahren zur Ermittlung einer Trägerfrequenzabweichung $(m. \Delta f)$ in Höhe eines ganzzahligen Vielfachen $(m)$ des Subträgerabstands $(\Delta f)$ in einem OFDM-Übertragungssystem aus mit phasenmodulierten OFDM-Symbolen besetzten Subkanälen ( $k \in \mathfrak{M}$ ) und aus mit OFDM-Symbolen besetzten Subkanälen ( $k \notin \mathfrak{M}$ ) **,** die in einer Modulation mit einer zur Anzahl $(M)$ der Phasenzustände der Phasenmodulation höheren Anzahl von Phasenzuständen moduliert sind, mit folgenden Verfahrensschritten:

• Potenzieren jedes empfangenen OFDM-Symbols ($Y_{n,k}$) mit einem der Anzahl ($M$) der Phasenzustände der Phasenmodulation entsprechenden Faktor,

• Ermitteln eines zum jeweiligen Subkanal ($k$) gehörigen Mittelwerts ( $\sum_n \lambda_{n,k}$ , $\sum_n \overline{\lambda}_{n,k}$ ) über zeitlich aufeinander folgende, potenzierte und im jeweiligen Subkanal ($k$) empfangene OFDM-Symbole ($\lambda_{n,k}$, $\overline{\lambda}_{n,k}$),

• Ermitteln einer zu einem jeweiligen ganzzahligen Faktor ($l$) gehörigen Metrik ($\Lambda(l)$) aus der Summe der ermittelten Mittelwerte ( $\sum_n \lambda_{n,k}$ , $\sum_n \overline{\lambda}_{n,k}$ ) über zeitlich aufeinander folgende, potenzierte und in jeweiligen Subkanälen ($k+l$) empfangene OFDM-Symbole ($\lambda_{n,k+1}$) für diejenigen Subkanäle des OFDM-Übertragungsrahmens, in denen phasenmodulierte OFDM-Symbole übertragen werden und für diejenigen Subkanäle des OFDM-Übertragungsrahmens, die jeweils um den Faktor ($l$) zu den mit phasenmodulierten OFDM-Symbolen besetzten Subkanälen ( $k \in \mathfrak{M}$ ) versetzt sind, und

• Identifizieren des zur maximal ermittelten Metrik ($\Lambda(l)$) gehörigen Faktors ($l$) als ganzzahliges Vielfaches *(m)* des Subträgerabstands *(Δf)* in der Trägerfrequenzabweichung ($m \cdot \Delta f$ ).

2. Verfahren zur Ermittlung einer Trägerfrequenzabweichung nach Anspruch 1,
**dadurch gekennzeichnet,**

**dass** die Metrik ($\Delta(l)$) aus der betragsquadrierten Summe der Mittelwerte ( $\sum_n \lambda_{n,k}$ , $\sum_n \overline{\lambda}_{n,k}$ ) der Subkanäle ($k+l$) ermittelt wird.

3. Verfahren zur Ermittlung einer Trägerfrequenzabweichung nach Anspruch 1 oder 2,
**dadurch gekennzeichnet,**
**dass** die Phasenmodulation eine kohärente oder differentielle Binary-Phase-Shift-Keying-, Quaternary-Phase-Shift-Keying-, M-wertige Phase-Shift-Keying-Modulation ist.

4. Verfahren zur Ermittlung einer Trägerfrequenzabweichung nach einem der Ansprüche 1 bis 3,
**dadurch gekennzeichnet,**
**dass** die Modulation der OFDM-Symbole in den übrigen Subkanälen ( $k \notin \mathfrak{M}$ ) eine Phasen-, Amplituden-Phasen-, Amplituden- oder Quadratur-Amplituden-Modulation ist.

5. Verfahren zur Ermittlung einer Trägerfrequenzabweichung nach einem der Ansprüche 1 bis 4,
**dadurch gekennzeichnet,**
**dass** vor der Potenzierung der empfangenen OFDM-Symbole ($Y_{n,k}$) eine Entzerrung der empfangenen OFDM-Symbole ($Y_{n,k}$) erfolgt.

6. Verfahren zur Ermittlung einer Trägerfrequenzabweichung nach Anspruch 5,
**dadurch gekennzeichnet,**
**dass** die Entzerrung eine reine Phasenentzerrung oder eine kombinierte Amplituden- und Phasenentzerrung ist.

7. Verfahren zur Ermittlung einer Trägerfrequenzabweichung nach Anspruch 6,
**dadurch gekennzeichnet,**
**dass** nach der Phasenentzerrung und der Potenzierung von empfangenen OFDM-Symbolen ($Y_{n,k}$) eine "harte Entscheidung" der einzelnen phasenentzerrten und potenzierten OFDM-Symbole ($\lambda_{n,k}$) erfolgt.

8. Verfahren zur Ermittlung einer Trägerfrequenzabweichung nach Anspruch 7,
**dadurch gekennzeichnet,**
**dass** die "harte Entscheidung" über eine signum-Funktion (sign(x))erfolgt.

9. Verfahren zur Ermittlung einer Trägerfrequenzabweichung nach einem der Ansprüche 1 bis 8,
**dadurch gekennzeichnet,**
**dass** die in bestimmten Subkanälen ( $k \in \mathfrak{M}$ ) empfangenen phasenmodulierten OFDM-Symbole OFDM-Nutzdatensymbole sind.

**10.** Verfahren zur Ermittlung einer Trägerfrequenzabweichung nach einem der Ansprüche 1 bis 8,
**dadurch gekennzeichnet,**
**dass** die in bestimmten Subkanälen ( $k \in \mathfrak{M}$ ) empfangenen phasen-modulierten OFDM-Symbole ($Y_{n,k}$) OFDM-Symbole mit in den als Signalisierungskanäle dienenden Subkanälen empfangenen Signalisierungsinformationen sind.

**11.** Verfahren zur Ermittlung einer Trägerfrequenzabweichung nach einem der Ansprüche 1 bis 8,
**dadurch gekennzeichnet,**
**dass** die in bestimmten Subkanälen ( $k \in \mathfrak{M}$ ) empfangenen phasenmodulierten OFDM-Symbole ($Y_{n,k}$) OFDM-Pilot- oder - Referenzsymbole sind.

**12.** Vorrichtung zur Ermittlung einer Trägerfrequenzabweichung ($m \cdot \Delta f$) in Höhe eines ganzzahligen Vielfachen ($m$) des Subträgerabstands ($\Delta f$) in einem OFDM-Übertragungssystem aus mit phasenmodulierten OFDM-Symbolen besetzten Subkanälen ( $k \in \mathfrak{M}$ ) und aus mit OFDM-Symbolen besetzten Subkanälen ( $k \notin \mathfrak{M}$ ), die in einer Modulation mit einer zur Anzahl ($M$) der Phasenzustände der Phasenmodulation höheren Anzahl von Phasenzuständen moduliert sind, mit einem Potenzierer (3) zur Potenzierung jedes empfangenen OFDM-Symbols ($Y_{n,k}$),

einem Mittelwertbildner (5) zur Ermittlung eines Mittelwerts ( $\sum_n \lambda_{n,k}$ , $\sum_n \overline{\lambda}_{n,k}$ ) über mehrere jeweils in einem Subkanal ($k$) aufeinander folgend empfangene OFDM-Symbole ($Y_{n,k}$), einem Metrikbildner (6) zur Ermittlung von Metriken ($\Lambda(l)$) aus der Summe von ermittelten Mittelwerten ( $\sum_n \lambda_{n,k}$ , $\sum_n \overline{\lambda}_{n,k}$ ) über zeitlich aufeinander folgende, potenzierte und in jeweiligen Subkanälen ($k+l$) empfangene OFDM-Symbole ($\lambda_{n,k+l}$) für diejenigen Subkanäle des OFDM-Übertragungsrahmens, in denen phasenmodulierte OFDM-Symbole übertragen werden und für diejenigen Subkanäle des OFDM-Übertragungsrahmens, die um einen Faktor ($l$) gegenüber den mit phasenmodulierten OFDM-Symbolen besetzten Subkanälen ( $k \in \mathfrak{M}$ ) versetzt sind, und
einem Maximalwertbildner (7) zur Ermittlung der maximalen Metrik ($\Lambda(l)$) .

**13.** Vorrichtung zur Ermittlung einer Trägerfrequenzabweichung nach Anspruch 12,
**dadurch gekennzeichnet,**
**dass** dem Potenzierer (3) ein Entzerrer (2) vorgeschaltet ist.

**14.** Vorrichtung zur Ermittlung einer Trägerfrequenzabweichung nach Anspruch 13,
**dadurch gekennzeichnet,**
**dass** der Entzerrer (2) ein reiner Phasenentzerrer oder ein kombinierter Amplituden- und Phasenentzerrer ist.

**15.** Vorrichtung zur Ermittlung einer Trägerfrequenzabweichung nach Anspruch 14,
**dadurch gekennzeichnet,**
**dass** im Fall eines reinen Phasenentzerrers dem Potenzierer (3) ein "harter Entscheider" (4) nachgeschaltet ist.

**Claims**

**1.** Method for determining a carrier frequency deviation ($m \cdot \Delta f$) as an integer multiple ($m$) of the sub-carrier separation ($\Delta f$) in an OFDM transmission system from sub-channels (( $k \in \mathfrak{M}$ )) populated with phase-modulated OFDM symbols and from sub-channels ( $k \notin \mathfrak{M}$ ) populated with OFDM symbols which are modulated in a modulation with a higher number of phase states than the number ($M$) of phase states of the phase modulation, with the following method steps:

• exponentiating each received OFDM symbol ($Y_{n,k}$) with a factor corresponding to the number ($M$) of the phase states of the phase modulation,

• determining a mean value ( $\sum_n \lambda_{n,k}$ , $\sum_n \overline{\lambda}_{n,k}$ ) for the respective sub-channel ($k$) over successive exponentiated OFDM symbols ($\lambda_{n,k}, \overline{\lambda}_{n,k}$) received in the respective sub-channel ($k$),

• determining a metric ($\Lambda(l)$) for a respective integer factor ($l$) from the sum of the determined mean values ($\sum_n \lambda_{n,k}$ , $\sum_n \overline{\lambda}_{n,k}$) over successive exponentiated OFDM symbols ($\lambda_{n,k+1}$) received in respective sub-channels ($k+l$) for the sub-channels of the OFDM transmission frame in which phase-modulated OFDM symbols are transmitted and for the sub-channels of the OFDM transmission frame which are in each case offset by the factor ($l$) in relation to the sub-channels ($k \in \mathfrak{M}$) populated with phase-modulated OFDM symbols, and

• identification of the factor ($l$) for the determined maximum metric ($\Lambda(l)$) as an integer multiple ($m$) of the sub-carrier separation ($\Delta f$) in the carrier frequency deviation (m•$\Delta f$).

2. Method for determining a carrier frequency deviation according to claim 1,
**characterised in that**

the metric ($\Lambda(l)$) is determined from the squared sum of the mean values ($\sum_n \lambda_{n,k}$ , $\sum_n \overline{\lambda}_{n,k}$) of the sub-channels ($k+l$).

3. Method for determining a carrier frequency deviation according to claim 1 or 2,
**characterised in that**
the phase modulation is a coherent or differential binary phase shift keying, quaternary phase shift keying, M-value phase shift keying modulation.

4. Method for determining a carrier frequency deviation according to one of claims 1 to 3,
**characterised in that**

the modulation of the OFDM symbols in the remaining sub-channels ($k \notin \mathfrak{M}$) is a phase, amplituden phase, amplitude or quadrature amplitude modulation.

5. Method for determining a carrier frequency deviation according to one of claims 1 to 4,
**characterised in that**
before the exponentiation of the received OFDM symbols ($Y_{n,k}$) the received OFDM symbols ($Y_{n,k}$) are corrected.

6. Method for determining a carrier frequency deviation according to claim 5,
**characterised in that**
the correction is a pure phase correction or a combined amplitude and phase correction.

7. Method for determining a carrier frequency deviation according to claim 6,
**characterised in that**
after the phase correction and the exponentiation of received OFDM symbols ($Y_{n,k}$) a "hard decision" is made on the individual phase-corrected and exponentiated OFDM symbols ($\lambda_{n,k}$).

8. Method for determining a carrier frequency deviation according to claim 7,
**characterised in that**
the "hard decision" is made by means of a signum function (*sign*($x$)).

9. Method for determining a carrier frequency deviation according to one of claims 1 to 8,
**characterised in that**
the phase-modulated OFDM symbols received in certain sub-channels ($k \in \mathfrak{M}$) are OFDM useful data symbols.

10. Method for determining a carrier frequency deviation according to one of claims 1 to 8,
**characterised in that**

the phase-modulated OFDM symbols ($Y_{n,k}$) received in certain sub-channels ($k \in \mathfrak{M}$) are OFDM symbols with signalling information received in the sub-channels serving as signalling channels.

11. Method for determining a carrier frequency deviation according to one of claims 1 to 8,
**characterised in that**
the phase-modulated OFDM symbols ($Y_{n,k}$) received in certain sub-channels ($k \in \mathfrak{M}$) are OFDM pilot or reference symbols.

**12.** Device for determining a carrier frequency deviation ($m \cdot \Delta f$) as an integer multiple ($m$) of the sub-carrier separation ($\Delta f$) in an OFDM transmission system from sub-channels (($k \in \mathfrak{M}$)) populated with phase-modulated OFDM symbols and from sub-channels ($k \notin \mathfrak{M}$) populated with OFDM symbols which are modulated in a modulation with a higher number of phase states than the number ($M$) of phase states of the phase modulation, with an exponentiator (3) for exponentiation of each received OFDM symbol ($Y_{n,k}$),

a mean value former (5) for determining a mean value ($\sum_n \lambda_{n,k}$ , $\sum_n \overline{\lambda}_{n,k}$) over a plurality of successive OFDM symbols $n$ $n$ ($Y_{n,k}$) received in each case in a sub-channel $(k)$,

a metric former (6) for determining metrics ($\Lambda(l)$) from the sum of determined mean values ($\sum_n \lambda_{n,k}$ , $\sum_n \overline{\lambda}_{n,k}$) over successive exponentiated OFDM symbols ($\lambda_{n,k+l}$) received in respective sub-channels ($k+l$) for the sub-channels of the OFDM transmission frame in which phase-modulated OFDM symbols are transmitted and for the sub-channels of the OFDM transmission frame which are offset by a factor ($l$) in relation to the sub-channels ($k \in \mathfrak{M}$) populated with phase-modulated OFDM symbols, and a maximum value former (7) for determining the maximum metric ($\Lambda(l)$).

**13.** Device for determining a carrier frequency deviation according to claim 12,
**characterised in that**
a correcting element (2) is connected in front of the exponentiator (3).

**14.** Device for determining a carrier frequency deviation according to claim 13,
**characterised in that**
the correcting element (2) is a pure phase correcting element or a combined amplitude and phase correcting element.

**15.** Device for determining a carrier frequency deviation according to claim 14,
**characterised in that**
in the case of a pure phase correcting element a "hard decision element" (4) is connected after the exponentiator (3).

## Revendications

**1.** Procédé de détermination d'une déviation de fréquence porteuse ($m \blacksquare \Delta f$) équivalant à un multiple entier (m) de l'intervalle de sous-porteuses ($\Delta f$) dans un système de transmission OFDM constitué de sous-canaux ($k \in$ M) occupés par des symboles OFDM modulés en phase et de sous-canaux ($k \notin$ M) occupés par des symboles OFDM, modulés selon une modulation avec un nombre d'états de phase supérieur au nombre ($M$) d'états de phase de la modulation de phase, comprenant les étapes suivantes.

• élévation de chaque symbole OFDM ($Y_{n,k}$) reçu à une puissance d'exposant correspondant au nombre ($M$) des états de phase de la modulation de phase,

• détermination d'une moyenne ($\sum_n \lambda_{n,k}$ , $\sum_n \overline{\lambda}_{n,k}$) associée à chaque sous-canal ($k$) de symboles OFDM ($\lambda_{n,k}$, $\overline{\lambda}_{n,k}$) temporellement successifs, élevés à une puissance et reçus dans le sous-canal ($k$),

• détermination d'une métrique ($\Lambda(l)$) associée à un exposant entier ($l$) respectif à partir du total des moyennes ($\sum_n \lambda_{n,k}$ , $\sum_n \overline{\lambda}_{n,k}$) déterminées de symboles OFDM ($\lambda_{n,k+l}$) temporellement successifs, élevés à une puissance et reçus dans les sous-canaux ($k+l$) pour les sous-canaux de la trame de transmission OFDM où sont transmis des symboles OFDM modulés en phase et pour les sous-canaux de la trame de transmission OFDM respectivement décalés de l'exposant ($l$) vers les sous-canaux ($k \in$ M) occupés par les symboles OFDM modulés en phase, et

• identification de l'exposant ($l$) associé à la métrique ($\Lambda(l)$) maximale déterminée en tant que multiple entier (m) de l'intervalle de sous-porteuses ($\Delta f$) dans la déviation de fréquence porteuse ($m \cdot \Delta f$).

**2.** Procédé de détermination d'une déviation de fréquence porteuse selon la revendication 1, **caractérisé**

en ce que la métrique ($\Lambda(l)$) est déterminée à partir du total élevé au carré des moyennes ($\sum\limits_{n}\lambda_{n,k}$ , $\sum\limits_{n}\overline{\lambda}_{n,k}$ )

des sous-canaux ($k+l$).

**3.** Procédé de détermination d'une déviation de fréquence porteuse selon la revendication 1 ou 2, **caractérisé**

en ce que la modulation de phase est une modulation binaire par déplacement de phase, une modulation quaternaire par déplacement de phase, une modulation M-aire à déplacement de phase, cohérente ou différentielle.

**4.** Procédé de détermination d'une déviation de fréquence porteuse selon l'une des revendications 1 à 3, **caractérisé**

en ce que la modulation des symboles OFDM dans les autres sous-canaux ($k\notin M$) est une modulation de phase, une modulation d'amplitude et de phase, une modulation d'amplitude ou d'amplitude en quadrature.

**5.** Procédé de détermination d'une déviation de fréquence porteuse selon l'une des revendications 1 à 4, **caractérisé**

en ce qu'une égalisation des symboles OFDM ($Y_{n,k}$) reçus a lieu avant l'élévation à une puissance des symboles OFDM ($Y_{n,k}$) reçus.

**6.** Procédé de détermination d'une déviation de fréquence porteuse selon la revendication 5, **caractérisé**

en ce que l'égalisation est une égalisation de phase pure ou une égalisation d'amplitude et de phase combinée.

**7.** Procédé de détermination d'une déviation de fréquence porteuse selon la revendication 6, **caractérisé**

en ce qu'après égalisation de phase et élévation à une puissance des symboles OFDM ($Y_{n,k}$) reçus, un « choix crucial » des différents symboles OFDM ($\lambda_{n,k}$) égalisés en phase et à puissance élevée est opéré.

**8.** Procédé de détermination d'une déviation de fréquence porteuse selon la revendication 7, **caractérisé**

en ce que le « choix crucial » est opéré au moyen d'une fonction signe (sign(x)).

**9.** Procédé de détermination d'une déviation de fréquence porteuse selon l'une des revendications 1 à 8, **caractérisé**

en ce que les symboles OFDM reçus dans des sous-canaux ($k\in M$) définis sont des symboles de données utiles OFDM modulés en phase.

**10.** Procédé de détermination d'une déviation de fréquence porteuse selon l'une des revendications 1 à 8, **caractérisé**

en ce que les symboles OFDM modulés en phase ($Y_{n,k}$) reçus dans des sous-canaux ($k\in M$) définis sont des symboles OFDM avec des informations de signalisation reçues dans les sous-canaux servant de canaux de signalisation.

**11.** Procédé de détermination d'une déviation de fréquence porteuse selon l'une des revendications 1 à 8, **caractérisé**

en ce que les symboles OFDM modulés en phase ($Y_{n,k}$) reçus dans des sous-canaux ($k\in M$) définis sont des symboles OFDM pilotes ou de référence.

**12.** Dispositif de détermination d'une déviation de fréquence porteuse (m■$\Delta f$) équivalant à un multiple entier ($m$) de l'intervalle de sous-porteuses ($\Delta f$) dans un système de transmission OFDM constitué de sous-canaux ($k\in M$) occupés par des symboles OFDM modulés en phase et de sous-canaux ($k\notin M$) occupés par des symboles OFDM, modulés selon une modulation avec un nombre d'états de phase supérieur au nombre ($M$) d'états de phase de la modulation de phase, avec un élévateur à une puissance (3) pour l'élévation à une puissance de chaque symbole OFDM ($Y_{n,k}$) reçu,

un calculateur de moyenne (5) pour la détermination d'une moyenne ( $\sum_n \lambda_{n,k}$ , $\sum_n \overline{\lambda}_{n,k}$ )de plusieurs symboles OFDM ($Y_{n,k}$) successivement reçus dans un sous-canal ($k$),

un calculateur de métrique (6) pour la détermination de métriques ($\Lambda(l)$) à partir du total des moyennes $\mathfrak{M}$ déterminées de symboles OFDM ($\lambda_{n,k+l}$) temporellement successifs, élevés à une puissance et reçus dans les sous-canaux ($k_+l$) pour les sous-canaux de la trame de transmission OFDM où sont transmis des symboles OFDM modulés en phase et pour les sous-canaux de la trame de transmission OFDM respectivement décalés de l'exposant ($l$) vers les sous-canaux (k ∈ M) occupés par les symboles OFDM modulés en phase, et

un calculateur de valeur maximale (7) pour la détermination de la métrique ($\Lambda(l)$) maximale.

13. Dispositif de détermination d'une déviation de fréquence porteuse selon la revendication 12, **caractérisé**
**en ce qu'**un égaliseur (2) est monté en amont de l'élévateur à une puissance (3).

14. Dispositif de détermination d'une déviation de fréquence porteuse selon la revendication 13, **caractérisé**
**en ce que** l'égaliseur (2) est un égaliseur de phase pur ou un égaliseur d'amplitude et de phase combiné.

15. Dispositif de détermination d'une déviation de fréquence porteuse selon la revendication 14, **caractérisé**
**en ce que**, dans le cas d'un égaliseur de phase pur, un « décideur crucial » (4) est monté en aval de l'élévateur à une puissance (3).

Fig. 1A

Fig. 1B

Fig. 2A        Fig. 2B        Fig. 2C

15

```
                      ┌──────────┐
                      │  Start   │
                      └────┬─────┘
                           ▼
┌─────┐  ┌──────────────────────────────────────────────┐
│ S10 ├──┤   Entzerren der empfangenen OFDM-Symbole      │
└─────┘  └──────────────────┬───────────────────────────┘
                            ▼
┌─────┐  ┌──────────────────────────────────────────────┐
│ S20 ├──┤  Potenzieren der entzerrten empfangenen       │
└─────┘  │          OFDM-Symbole                         │
         └──────────────────┬───────────────────────────┘
                            ▼
┌─────┐  ┌──────────────────────────────────────────────┐
│ S30 ├──┤  Mittelwertbilden aufeinander folgender       │
└─────┘  │  potenzierter OFDM-Symbole jeweils eines       │
         │              Subkanals                        │
         └──────────────────┬───────────────────────────┘
                            ▼
┌─────┐  ┌──────────────────────────────────────────────┐
│ S40 ├──┤  Bilden jeweils einer Metrik aus den für die  │
└─────┘  │  mit phasen-modulierten OFDM-Symbolen         │
         │  besetzten Subkanäle ermittelten              │
         │  Erwartungswerten sowie aus den für           │
         │  Subkanäle ermittelten Erwartungswerten,      │
         │  die um jeweils einen ganzzahligen            │
         │  Faktor l zu den mit phasenmodulierten        │
         │  OFDM-Symbolen besetzten Subkanälen           │
         │  versetzt sind                                │
         └──────────────────┬───────────────────────────┘
                            ▼
┌─────┐  ┌──────────────────────────────────────────────┐
│ S50 ├──┤  Ermitteln des ganzzahligen Faktor m der      │
└─────┘  │  Träger-frequenzverschiebung als der zur      │
         │  maximalen Metrik gehörige ganzzahlige        │
         │              Faktor l                         │
         └──────────────────┬───────────────────────────┘
                            ▼
                      ┌──────────┐
                      │   Ende   │
                      └──────────┘
```

## Fig. 3

Fig. 4

**EP 1 993 249 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7133479 B2
- DE 69807945 T2